# EUROPEAN PATENT APPLICATION

(11) **EP 4 303 201 A1**
(43) Date of publication of application: **10.01.2024**
(21) Application number: 22763628.9
(22) Date of filing: 04.03.2022
(51) Int. Cl.: C04B 11/26, C04B 11/05, C01F 11/18

(54) **METHOD FOR PREPARING INORGANIC COMPOUND USING DESULFURIZATION GYPSUM FOR REDUCING GREENHOUSE GAS EMISSIONS**

(30) Priority: 04.03.2021 KR 20210028853
(71) Applicant: Hyundai Oilbank Co., Ltd., Seosan-si, Chungcheongnam-do 31902 (KR)
(72) Inventor: LEE, Young Ho, Yongin-si Gyeonggi-do 17077 (KR); CHUNG, Yong Kwon, Seoul 08255 (KR); YUN, Byung Kwon, Hwaseong-si Gyeonggi-do 18297 (KR); SUNG, Dae Jin, Seoul 05274 (KR); KIM, Cheol Hyun, Yongin-si Gyeonggi-do 16876 (KR)
(74) Representative: Vossius & Partner Patentanwälte Rechtsanwälte mbB
(86) International application number: PCT/KR2022/003070
(87) International publication number: WO 2022/186647

(57) **Abstract**

The present invention relates to a method for preparing an inorganic compound using desulfurization gypsum for reducing greenhouse gas emissions, and, more specifically, to a method for preparing an inorganic compound, in which calcium sulfate and calcium carbonate, which have various uses as construction materials and the like, can be prepared using, as raw material, desulfurization gypsum which, being a recycled resource, is industrial waste, and an extraction agent, and the extraction agent can be reused after separation, and thus, compared to existing processes, greenhouse gases and manufacturing costs can be remarkably reduced.

## Description

### [TECHNICAL FIELD]

The present invention relates to a method for producing inorganic compounds using desulfurization gypsum for reduction of greenhouse gas emissions, and more specifically, to a method for producing inorganic compounds that can produce anhydrous gypsum and calcium carbonate which are used for various purposes such as construction materials, using desulfurization gypsum which is an industrial waste as a circulating resource and an eluent as raw materials, wherein the eluent can be separated and reused, thereby dramatically reducing greenhouse gases and process costs compared to conventional processes.

### [BACKGROUND ART]

Domestic greenhouse gas emissions averaged 662 million tons of CO₂eq. per year from 2007 to 2017, with energy and industrial processes accounting for more than 94%. Among them, carbon dioxide has a global warming potential (GWP) of 1, which is low compared to other greenhouse gases, but the amount of carbon dioxide generated reaches 604 million tons CO₂eq., accounting for more than 91% of the total amount generated, making a great impact on global wanning. In addition, the generation amount increased by 23% between 2007 and 2017, and the seriousness of situation is growing.

Precipitated calcium carbonate (PCC, CaCO₃) is used as an additive and filler for quality improvement in the food, paper, rubber, plastic and paint industries. Conventional PCC manufacturing technology is a method of producing quicklime by removing carbon dioxide at a high temperature using mined limestone and reacting it with carbon dioxide again, and the following reaction is performed.
1st. CaCO₃ (Limestone) → CaO (Lime) + CO₂ (S900°C)
2nd. CaO + H₂O → Ca(OH)₂
3rd. Ca(OH)₂ + CO₂ → CaCO₃ (PCC) +H₂O

However, this conventional method requires a lot of process costs due to the heat source used to make limestone into quicklime, and also has a problem of adversely affecting the environment due to greenhouse gases such as carbon dioxide generated by dissociation from the heat source and limestone.

In addition, anhydrous gypsum (calcium sulfate, CaSO₄) is used as a representative construction material. However, since there are no Korean mines are capable of mining anhydrous gypsum, most of the quantity is imported from abroad.

Therefore, there is still a demand for a method capable of producing anhydrous gypsum and calcium carbonate used as various industrial materials while reducing greenhouse gas emissions and process costs.

### [CONTENTS OF THE INVENTION]

### [PROBLEMS TO BE SOLVED]

The purpose of the present invention is to provide a method for producing inorganic compounds that can produce anhydrous gypsum and calcium carbonate which are used for various purposes such as construction materials, using desulfurization gypsum which is an industrial waste as a circulating resource and an eluent as raw materials, wherein the eluent can be separated and reused, thereby dramatically reducing greenhouse gases and process costs compared to conventional processes.

### [TECHNICAL MEANS]

In order to achieve the technical purpose, the present invention provides a method for producing inorganic compounds using desulfurization gypsum comprising an anhydrous gypsum powder manufacturing step of filtering a mixture of desulfurized gypsum, eluent and water to separate the filtrate and anhydrous gypsum cake, and drying the separated anhydrous gypsum cake; and a calcium carbonate powder manufacturing step of supplying a carbon dioxide-containing gas to the filtrate separated in the anhydrous gypsum powder manufacturing step, filtering the mixture to separate it into a calcium carbonate cake and an eluent solution, and drying the separated calcium carbonate cake, wherein the eluent solution separated in the calcium carbonate powder manufacturing step is reused by supplying it to the anhydrous gypsum powder manufacturing step.

### [EFFECT OF THE INVENTION]

According to the method for producing an inorganic compound using desulfurization gypsum of the present invention, since desulfurization gypsum, a circulating resource generated in an FBC boiler, is used as a raw material, it is possible to reduce the amount of limestone which is a natural resource, so that resources can be preserved. And since the process of turning limestone into quicklime of the existing calcium carbonate manufacturing method is not required, it is eco-friendly because it can reduce the cost of heat sources and greenhouse gases such as carbon dioxide generated in the quicklime manufacturing process.

In addition, desulfurization gypsum, an undervalued circulating resource, can be used to manufacture precipitated calcium carbonate and anhydrous gypsum with high added value, and localization of anhydrous gypsum, which is highly dependent on imports, is possible. In addition, CaO separated from desulfurization gypsum can contribute significantly to reducing greenhouse gas emissions by reacting it with carbon dioxide.

### [BRIEF DESCRIPTION OF THE FIGURES]

Fig. 1 schematically shows the process of Example 1, which is a method for producing an inorganic compound of the present invention.
Fig. 2 schematically shows the process of the Comparative Example of the present invention corresponding to the prior art.
Fig. 3 shows the result of X-ray diffraction analysis of the anhydrous gypsum powder obtained in Examples 1 and 2.
Fig. 4 shows the result of X-ray diffraction analysis confirming that Vaterite-type PCC was obtained in Examples 1 and 2.
Fig. 5 shows the result of X-ray diffraction analysis of inorganic compounds (anhydrous gypsum powder and PCC) obtained in the Comparative Example.
Fig. 6 shows the result of SEM analysis of PCC obtained in Example 1.
Fig. 7 shows the result of SEM analysis of PCC obtained in the Comparative Example.

### [CONCRETE MODE FOR CARRYING OUT THE INVENTION]

The present invention is explained in more detail below.

The method for producing inorganic compounds using desulfurization gypsum of the present invention comprises an anhydrous gypsum powder manufacturing step of filtering a mixture of desulfurized gypsum, eluent and water to separate the filtrate and anhydrous gypsum cake, and drying the separated anhydrous gypsum cake; and a calcium carbonate powder manufacturing step of supplying a carbon dioxide-containing gas to the filtrate separated in the anhydrous gypsum powder manufacturing step, filtering the mixture to separate it into a calcium carbonate cake and an eluent solution, and drying the separated calcium carbonate cake, wherein the eluent solution separated in the calcium carbonate powder manufacturing step is reused by supplying it to the anhydrous gypsum powder manufacturing step.

In the present specification, the anhydrous gypsum powder manufacturing step may be referred to as the first step, and the calcium carbonate powder manufacturing step may be referred to as the second step.

The method for producing inorganic compounds using desulfurization gypsum of the present invention comprises the anhydrous gypsum powder manufacturing step of filtering a mixture of desulfurized gypsum, eluent and water to separate the filtrate and anhydrous gypsum cake, and drying the separated anhydrous gypsum cake.

CaO in desulfurization gypsum (CaO·CaSO₄) is hydrated and dissolved in water and separated from CaSO₄, but the degree is low, so an eluent that can promote dissolution is injected. As the eluting agent, various components as described below may be used, and in one embodiment, NH₄Cl may be used. The reaction at this time is as follows.

CaSO₄ · CaO(s) + 2NH₄Cl(aq) → CaSO₄(s) + CaCl₂(aq) + 2NH₃(aq) + H₂O (l)

In one embodiment of the present invention, CaSO₄(s), CaCl₂(aq), 2NH₃(aq) and H₂O(l) may exist in the mixture of desulfurization gypsum, eluent and water due to the above reaction. Since CaCl₂ has a higher solubility in water than Ca(OH)₂ generated when no separate eluent is added (i.e., when only desulfurization gypsum and water are mixed), a small amount of water can be used to elute CaO and separate it from anhydrous gypsum.

The desulfurization gypsum used in the present invention is manufactured for the purpose of removing sulfur oxides generated in a circulating fluidized bed boiler (CFBC boiler), its raw material is limestone, and the desulfurization reaction path in the CFBC boiler is as follows.
1st. CaCO₃ → CaO + CO₂ (850~900°C)
2nd. CaO + SO₂ + 1/2O₂ → CaSO₄

The desulfurization gypsum (CaO·CaSO₄) used in the present invention may comprise 40 to 60% by weight of CaSO₄ and 25 to 45% by weight of CaO. In the second step of the desulfurization reaction, the CaO conversion rate is about 50%, and precipitated calcium carbonate is produced using unreacted CaO present in the desulfurization gypsum, and other components can be used as anhydrous gypsum products.

The eluent used in the anhydrous gypsum powder manufacturing step may be one selected from the group consisting of NH₄Cl, sodium boride, urea, NH₄NO₃ and combinations thereof-for example, NH₄Cl.

In the anhydrous gypsum powder manufacturing step, the weight ratio of desulfurization gypsum and water may be 1:5 to 1:45-for example, 1:5 to 1:40, 1:6 to 1:30 or 1:8 to 1:20. If the amount of water compared to desulfurization gypsum is lower than the above ratio, the amount of dissolution of CaO in the desulfurization gypsum is insignificant, so the quality (purity) of anhydrous gypsum and the amount of calcium carbonate produced may decrease. Conversely, if the content of water is greater than the above ratio, it is difficult to obtain additional effects.

In the anhydrous gypsum powder manufacturing step, the weight ratio of desulfurization gypsum and eluent may be 1:0.7 to 1:2-for example, 1:0.75 to 1:1.8 or 1:0.8 to 1:1.5. If the amount of eluent compared to desulfurization gypsum is lower than the above ratio, the amount of dissolution of CaO in the desulfurization gypsum is insignificant, so the quality (purity) of anhydrous gypsum and the amount of calcium carbonate produced may decrease. Conversely, if the content of eluent is greater than the above ratio, it is difficult to obtain additional effects.

In the anhydrous gypsum powder manufacturing step, anhydrous gypsum powder may be prepared by drying the separated anhydrous gypsum cake. Manufactured anhydrous gypsum can be used as a building material, fertilizer, etc. through washing and drying processes.

The anhydrous gypsum powder manufacturing step may be performed at 20°C to 30°C-for example, room temperature-for 2 to 10 hours-for example, 2 to 8 hours or 2 to 6 hours.

The method for producing inorganic compounds using desulfurization gypsum of the present invention comprises a calcium carbonate powder manufacturing step of supplying a carbon dioxide-containing gas to the filtrate separated in the anhydrous gypsum powder manufacturing step, filtering the mixture to separate it into a calcium carbonate cake and an eluent solution, and drying the separated calcium carbonate cake.

The filtrate separated in the anhydrous gypsum powder manufacturing step may contain CaCl₂ and NH₃ due to the reaction between CaO separated from the desulfurization gypsum and the eluent. In one embodiment, when a carbon dioxide-containing gas is supplied to the filtrate from which CaO is eluted (calcium is eluted in the form of CaCl₂) to give carbon dioxide, CaCl₂ is precipitated as CaCO₃ (PCC), and NH₃ (aq.) and Cl⁻ combines to form NH₄Cl.

CaCl₂(aq) + 2NH₃(aq) + 2H₂O(l) + CO₂(g) → CaCO₃(s) + 2NH₄Cl(aq) + H₂O (l)

In the calcium carbonate powder manufacturing step, the mixture can be separated into calcium carbonate cake and eluent solution, and the separated eluent solution can be reused by supplying the solution to the anhydrous gypsum manufacturing step. In one embodiment, the eluent may be NH₄Cl, and may be used for eluting CaO in desulfurization gypsum by supplying it to the anhydrous gypsum powder manufacturing step, thereby reducing process costs due to the use of the eluent.

The carbon dioxide-containing gas used in the calcium carbonate powder manufacturing step is not particularly limited, and for example, exhaust gas from a circulating fluidized bed combustion boiler or 100% carbon dioxide gas can be used. Although not particularly limited, the carbon dioxide-containing gas may be supplied at 100 to 500 ml/min.

In the calcium carbonate powder manufacturing step, after separating the calcium carbonate cake and the eluent solution, the eluent is supplied to the anhydrous gypsum powder manufacturing step, and the separated calcium carbonate cake is dried to prepare calcium carbonate powder. The produced calcium carbonate may be precipitated calcium carbonate (PCC), which, unlike limestone, has high whiteness and small particle size, and is used as a functional agent in various industries.

The calcium carbonate powder manufacturing step may be performed at 20°C to 30°C-for example, at room temperature-for 1 to 5 hours-for example, 1 to 4 hours or 1 to 3 hours.

The present invention is explained in more detail through the following Examples and Comparative Examples. However, the scope of the present invention is not limited thereby in any manner.

### [Examples]

### Example 1, Example 2 and Comparative Example

In the configuration shown in Table 1 below, a method for producing inorganic compound using the desulfurization gypsum of the present invention was performed (Step 1: anhydrous gypsum powder manufacturing step, Step 2: calcium carbonate powder manufacturing step).

Example 1 uses the eluent for the first time, Example 2 uses the eluate separated from the reaction of Step 2 of Example 1, and the Comparative Example uses only desulfurization gypsum and water without using a separate eluent.

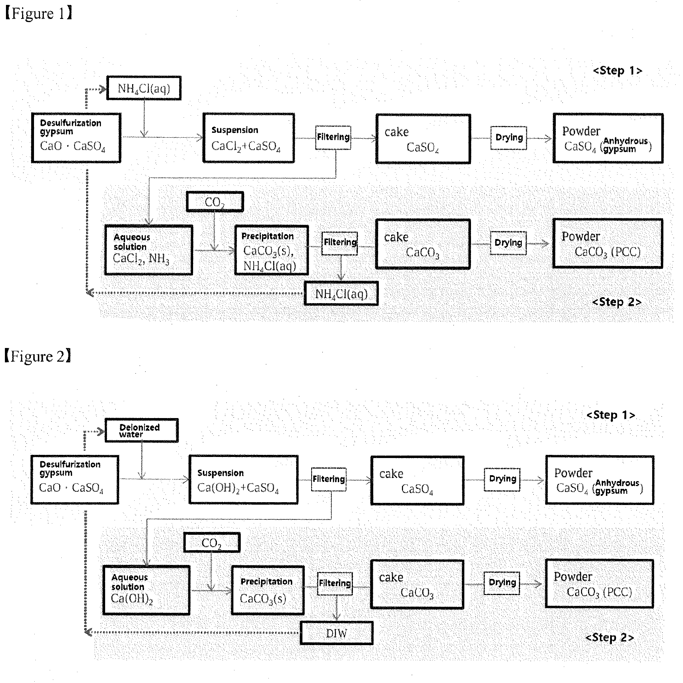

The process of Example 1, which is a method for producing the inorganic compound of the present invention and the process of the Comparative Example are schematically shown in Figs. 1 and 2, respectively.

**[Table 1]**

| **Categories** | **Step 1: CaO elution** | | | | | | **Step 2: PCC manufacturing** | | |
|---|---|---|---|---|---|---|---|---|---|
| | **Raw materials (g)** | | | | **Time** | **Temperature** | **Supplied CO²** | **Time** | **Temperature** |
| | **Desulfurization gypsum** | **NH₄Cl** | **Deionized water** | **Added ratio of Ca²⁺:2Cl⁻** | | | | | |
| Example 1 | 60 | 51 | 600 | 1:2 | 4h | Room temperature | 100%, 200ml/min | 1h20m | Room temperature |
| Example 2 | 60 | Using the eluate separated from the reaction of Step 2 of Example 1 | | | 4h | Room temperature | 100%, 200ml/min | 1h20m | Room temperature |
| Comparative Example | 12 | 0 | 600 | 1:0 | 15h | Room temperature | 100%, 200ml/min | 6h00m | Room temperature |

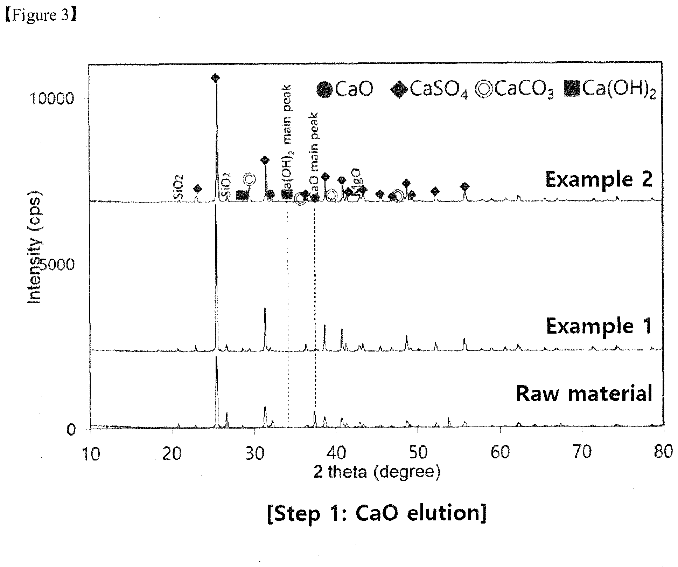

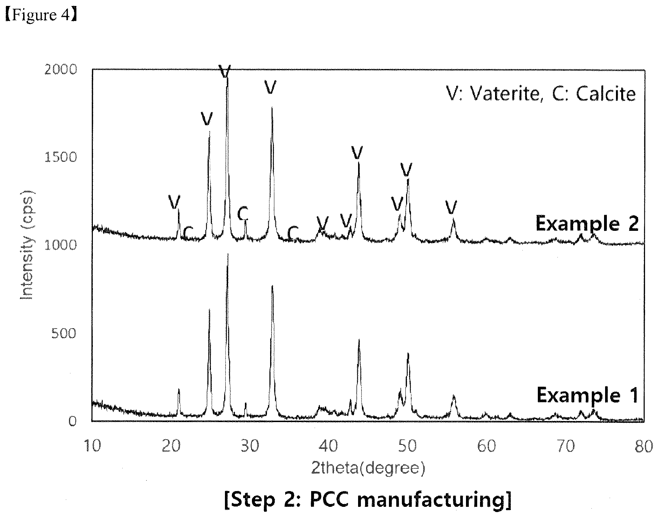

The X-ray diffraction analysis results of the inorganic compounds obtained in Examples 1 and 2-that is, anhydrous gypsum powder and calcium carbonate (PCC)-are shown in Figs. 3 and 4, respectively.

From Fig. 3, it was confirmed that the anhydrous gypsum after the first step of Example 1 was produced in a form in which CaO and Ca(OH)₂ components were removed compared to the raw material desulfurization gypsum. In addition, in Example 2, it was confirmed that the reused eluent elutes CaO and Ca(OH)₂ components in the desulfurization gypsum, which is the raw material, in the same way as in Example 1. This can be said to prove the effectiveness of the reuse of the eluent in the method for producing inorganic compounds using the desulfurization gypsum of the present invention.

In addition, the results of X-ray diffraction analysis confirming that calcium carbonate in the form of vaterite (PCC) was obtained in Examples 1 and 2 are shown in Fig. 4. It was confirmed that vaterite-type PCC was synthesized by adding carbon dioxide to the filtrate in the second step of Example 1, and PCC of the same type (vaterite) as Example 1 was synthesized in Example 2 in which the process was performed by reusing the eluent of Example 1. This can also be said to prove the effectiveness of the reuse of the eluent in the method for producing inorganic compounds using the desulfurization gypsum of the present invention.

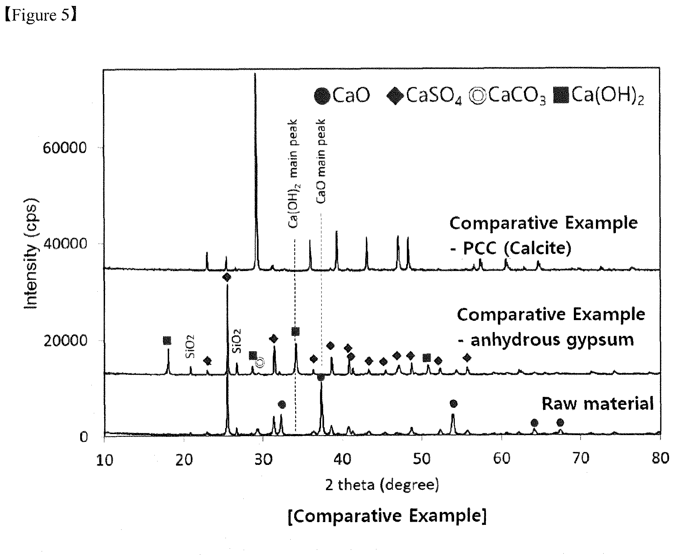

Meanwhile, the X-ray diffraction analysis result of the inorganic compounds (anhydrous gypsum powder and PCC) obtained in the Comparative Example is shown in Fig. 5. In the Comparative Example, in order to dissolve CaO in the desulfurization gypsum, a large amount of water (solvent) was used in the Step 1 process compared to the Examples and sufficient reaction time was given, but it was confirmed that CaO remained in a hydrated form in the anhydrous gypsum. In addition, it was confirmed that PCC in the form of calcite was synthesized in the step 2 process differently from the Examples.

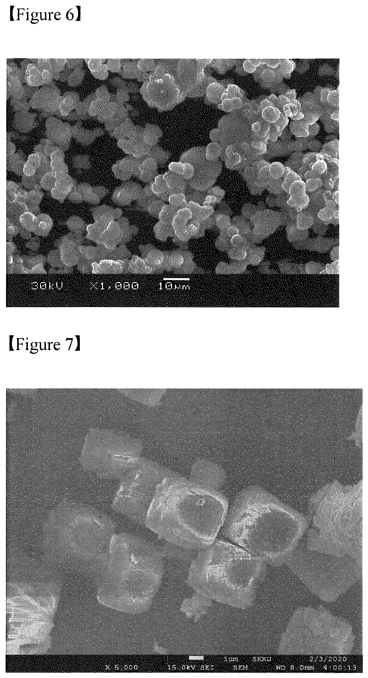

Fig. 6 shows the SEM analysis result of PCC obtained in Example 1, and Fig. 7 shows the SEM analysis result of PCC obtained in the Comparative Example. It can be confirmed that the PCC obtained in Example 1 is vaterite particles and the PCC obtained in the Comparative Example is calcite particles. As can be seen in Fig. 6, vaterite particles have a spherical shape unlike calcite particles, and have the advantage of increasing strength and improving economic efficiency while maintaining the flexibility of rubber when used as a rubber additive. On the other hand, as can be seen in Fig. 7, calcite particles are mainly in the form of hexagons, and have angles, so they have little flexibility compared to vaterite particles.

## Claims

1. A method for producing inorganic compounds using desulfurization gypsum comprising
an anhydrous gypsum powder manufacturing step of filtering a mixture of desulfurized gypsum, eluent and water to separate the filtrate and anhydrous gypsum cake, and drying the separated anhydrous gypsum cake; and
a calcium carbonate powder manufacturing step of supplying a carbon dioxide-containing gas to the filtrate separated in the anhydrous gypsum powder manufacturing step, filtering the mixture to separate it into a calcium carbonate cake and an eluent solution, and drying the separated calcium carbonate cake,
wherein the eluent solution separated in the calcium carbonate powder manufacturing step is reused by supplying it to the anhydrous gypsum powder manufacturing step.

2. The method for producing inorganic compounds using desulfurization gypsum according to claim 1, wherein the desulfurized gypsum is prepared in a CFBC boiler and comprises 40 to 60% by weight of CaSO₄ and 25 to 45% by weight of CaO.

3. The method for producing inorganic compounds using desulfurization gypsum according to claim 1, wherein the eluent is selected from the group consisting of NH₄Cl, NH₄NO₃ and combinations thereof.

4. The method for producing inorganic compounds using desulfurization gypsum according to claim 1, wherein the weight ratio of desulfurization gypsum and water is 1:5 to 1:45 in the anhydrous gypsum powder manufacturing step.

5. The method for producing inorganic compounds using desulfurization gypsum according to claim 1, wherein the weight ratio of desulfurization gypsum and eluent is 1:0.7 to 1:2 in the anhydrous gypsum powder manufacturing step.

6. The method for producing inorganic compounds using desulfurization gypsum according to claim 1, wherein the carbon dioxide-containing gas is an exhaust gas of a circulating fluidized bed combustion boiler.

7. The method for producing inorganic compounds using desulfurization gypsum according to claim 1, wherein the anhydrous gypsum powder manufacturing step is performed at 20°C to 30°C for 2 to 10 hours.

8. The method for producing inorganic compounds using desulfurization gypsum according to claim 1, wherein the calcium carbonate powder manufacturing step is performed at 20°C to 30°C for 1 to 5 hours.
